# EUROPÄISCHE PATENTSCHRIFT

(11) **EP 0 486 848 B1**
(45) Veröffentlichungstag und Bekanntmachung des Hinweises auf die Patenterteilung: **04.06.1997**
(21) Anmeldenummer: 91118384.6
(22) Anmeldetag: 29.10.1991
(51) Int. Cl.: B60G 17/015

(54) **Sensor zur Messung der Relativgeschwindigkeit und/oder der Stellung zwischen einem Dämpferzylinder und einem sich in diesem bewegenden Dämpfungskolben**
Relative speed or position for a damper piston moving inside a damper body
Capteur de position ou de vitesse relative entre un cylindre d'amortisseur et un piston se déplaçant dans ce cylindre

(30) Priorität: 17.11.1990 DE 4036704; 07.03.1991 DE 4107290; 12.08.1991 DE 4126586
(43) Veröffentlichungstag der Anmeldung: 27.05.1992
(73) Patentinhaber: August Bilstein GmbH, 58256 Ennepetal (DE)
(72) Erfinder: Gesenhues, Ludger, Dipl.-Ing., W-5810 Witten 7 (DE); Hölscher, Reinhard, Dr. Ing., W-4796 Salzkotten (DE); Hoffmann, Hans Jürgen, W-5600 Wuppertal 12 (DE); Huang, Zhen, Dipl.-Ing., W-5600 Wuppertal 1 (DE); Krüner, Thomas, W-5828 Ennepetal 13 (DE); Schmidt, Klaus, Dipl.-Ing., W-5060 Bergisch Gladbach 2 (DE)

(56) Entgegenhaltungen:
- EP-A- 0 039 181
- DE-A- 2 911 768
- DE-C- 3 909 190
- DE-U- 8 524 086
- FR-A- 2 608 752
- FR-A- 2 612 589
- GB-A- 2 098 007
- US-A- 4 054 295
- US-A- 4 949 573

## Beschreibung

Die Erfindung bezieht sich auf einen Sensor zur Messung der Relativgeschwindigkeit und/oder der Stellung zwischen einem Dämpferzylinder und einem mit einer Kolbenstange verbundenen, sich in diesem bewegenden Dämpferkolben eines Schwingungsdämpfers oder Federbeins für Kraftfahrzeuge.

Derartige Schwingungsdämpfer oder Federbeine werden als Bindeglieder zur Übertragung der Schwingungen von der Fahrbahnoberfläche über das Rad-Federsystem auf die Karosserie eingesetzt, wobei Federbeine insbesondere für die Kraftfahrzeug-Vorderachse zum Einsatz kommen. Zur Gewährleistung eines hohen Fahrkomforts als auch einer größeren Fahrsicherheit werden sehr oft Schwingungsdämpfer und Federbeine mit semiaktiver oder aktiver Dämpfungsregelung eingesetzt.

Für eine solche Regelung ist es notwendig, die unterschiedlichsten Bewegungsgrößen, wie Relativgeschwindigkeit zwischen Aufbau und Achse, die Kolbenstellung im Dämpferzylinder oder die Aufbaubeschleunigung, zu messen und auf eine Regeleinrichtung, die eine Stellgröße zur Veränderung der Dämpfungskraft erzeugt, zu führen.

In der deutschen Patentschrift DE-PS 39 09 190 wird ein Relativgeschwindigkeitssensor für einen Schwingungsdämpfer beschrieben. Der Sensor besteht aus einer zylindrischen Spule, welche sich in der mit der Kolbenstange verbundenen Abdeckung befindet, und einem Dauermagneten, welcher an der Führungsverschlußseite des Dämpferzylinders angeordnet ist. Der Sensor liefert über die induzierte Spannung in der Sensorwicklung ein Signal für die Relativgeschwindigkeit. Eine Messung und damit eine Einstellung des Ein- und Ausfahrhubes des Dämpfungskolbens ist nicht möglich.

Ein weiterer Nachteil dieses in einem Schwingungsdämpfer exakt arbeitenden Sensors, der aus einer in der Abdeckung befindlichen Spule und einem Führungsverschluß des Dämpferzylinders angeordneten Dauermagneten besteht, liegt darin, daß dieser Sensor bei einem Einsatz in einem Federbein zu Meßungenauigkeiten, die die Regelung unbrauchbar machen, führen würde, da die bei einem Federbein auf dem Federteller des Außenrohrs aufsitzende Schraubenfeder hier ebenfalls als Spule wirkt. Durch die Relativbewegung zwischen der Schraubenfeder und der Sensorwicklung und die sich verändernde Wicklungsweite der Schraubenfeder entsteht eine veränderliche Störinduktion, die durch die Auswerteelektronik nicht kompensiert werden kann.

Andererseits werden bei Federbeinen oft wegen des Platzbedarfs keine Abdeckungen sondern biegsame Falten aufweisende Gummischutzrohre verwendet, die eine Anordnung der Sensorwicklung gemäß dem Stand der Technik nicht zulassen.

Die DE-OS 29 11 768 zeigt eine Kombination aus mehreren Sensorwicklungen und Dauermagneten zur Messung der Endposition und zur Messung der Bewegung bzw. der Geschwindigkeit der relativ zueinander sich bewegenden Teile. Hierbei ist das Sensorsystem zur Messung der Endposition, d.h. des Grenzwertes, als eine aus wenigen Windungen ausgebildete Spule mit einem zugehörigen Magneten und das System zur Messung der Geschwindigkeit als eine über eine große Länge ausgebildete weitere Sensorwicklung mit zugehörigem Magneten ausgebildet.

Eine solche Ausbildung erfordert eine relativ aufwendige Herstellung des gesamten Dämpfers und erfordert unterschiedliche Spulen und Zuleitungssysteme, die aufgrund der dadurch sich verändernden Baugröße als nachteilig anzusehen sind.

Der Erfindung liegt die Aufgabe zugrunde, einen Sensor für einen Schwingungsdämpfer und ein Federbein eines Kraftfahrzeuges zu schaffen, mit dem neben der Relativgeschwindigkeit zwischen Aufbau und Achse auch die Endposition des Ein- und Ausfahrhubes gemessen werden kann.

Die Aufgabe wird durch einen Sensor zur Messung der Relativgeschwindigkeit und/oder der Stellung zwischen einem Dämpferzylinder und einem sich in diesem bewegenden Dämpfungskolben nach den Merkmalen der Patentansprüche gelöst.

Bei einem Sensor für einen Schwingungsdämpfer kann die Sensorwicklung von der mit der Kolbenstange verbundenen Abdeckung aufgenommen und der Dauermagnet an oder in der Wandung des Dämpferzylinders angeordnet werden. Eine weitere Möglichkeit besteht darin, die Sensorwicklung in die aus nichtmagnetisierbarem Material bestehende Wandung des Dämpferzylinders einzubringen oder bei einem Zweirohrdämpfer zwischen der Wandung des Dämpferzylinders und dem Außenrohr anzuordnen und den Dauermagneten mit dem Dämpfungskolben oder mit dem in den Dämpferzylinder eintauchenden Teil der Kolbenstange zu verbinden.

Bei einem Federbein umgibt die Sensorwicklung vorzugsweise die Kolbenstange unterhalb des Zuganschlages und der Dauermagnet ist an oder in der Wandung des Zylinderrohrs angeordnet. Die elektrischen Anschlüsse sind durch die hohle Kolbenstange nach außen geführt.

Eine weitere Ausführung des Sensors für ein Federbein besteht darin, die Sensorwicklung axial in der hohlen Kolbenstange anzuordnen, wenn diese aus einem nichtmagnetisierbaren Material besteht. Wurde der Dämpferzylinder aus einem nichtmagnetisierbaren Material gefertigt, ist es günstig, den Dauermagneten an der Außenwandung des Dämpferzylinders oder an der Innenwandung des Außenrohrs zu befestigen, wobei auch die entgegengesetzte Ausführung, die als zylindrische Spule ausgebildete Sensorwicklung zwischen Außenwandung des aus nichtmagnetisierbarem Material bestehenden Dämpferzylinders und der Innenwandung des Außenrohrs und den Dauermagneten an der Kolbenstange anzuordnen, möglich ist.

Die Endstellung des Ein- und Ausfahrhubes angebende, getrennt abgreifbare, erhöhte induzierte Spannung an den Enden der Sensorwicklung wird durch eine erhöhte Windungszahl je Längeneinheit in den Endbereichen realisiert. Eine weitere vorteilhafte Ausführungsform besteht darin, die Sensorwicklung in den Endbereichen mehrlagig zu wickeln oder die Windungen dichter zu legen.

Ein sehr genaues Meßsignal wird erhalten, wenn das den Dauermagneten tragende Teil und das die Sensorwicklung tragende Teil für das Magnetfeld des Dauermagneten einen geschlossenen magnetischen Kreis bilden und der beispielsweise als Ringmagnet ausgebildete Dauermagnet in Anordnung zur Kolbenstange radial polarisiert ist.

Der Dauermagnet kann jedoch auch aus ringförmig angeordneten Einzelmagneten bestehen.

Der erfindungsgemäße, einfach aufgebaute, passive Sensor kann ohne Minderung der Gleitlänge des Schwingungsdämpfers oder des Federbeins eingesetzt werden.

Die Erfindung wird anhand eines Ausführungsbeispiels näher erläutert. Die zugehörigen Zeichnungen zeigen:
- Fig. 1: einen Schwingungsdämpfer mit einem Sensor, bei dem die Sensor- und Meßwicklungen in der Abdeckung angeordnet sind und der Dauermagnet mit dem Dämpferzylinder verbunden ist,
- Fig. 2: ein Detail mit dem oberen Abschnitt der Sensorwicklung und einem Dauermagnet mit Zwischenlage,
- Fig. 3: einen Schwingungsdämpfer ohne Abdeckung mit einem Sensor, bei dem die Sensor- und Meßwicklungen auf dem Dämpferzylinder aufgebracht sind und der Dauermagnet an der beweglichen Kolbenstange befestigt ist,
- Fig. 4: einen Schwingungsdämpfer mit einem Sensor, bei dem die Sensor- und Meßwicklungen auf dem Dämpferzylinder aufgebracht sind und der Dauermagnet sich in der Abdeckung befindet,
- Fig. 5: ein Federbein mit einem Sensor, bestehend aus den die Kolbenstange umgebenden Sensorwicklungen und einem mit dem Zylinderrohr verbundenen Dauermagneten,
- Fig. 6: ein Federbein mit einem Sensor, bestehend aus den in der hohlen Kolbenstange angeordneten Sensorwicklungen und einem mit dem Zylinderrohr verbundenen Dauermagneten,
- Fig. 7: ein Federbein mit einem Sensor, bestehend aus den an der Außenwandung des Zylinderrohrs angeordneten Sensor- und Endwicklungen und einem mit der Kolbenstange verbundenen Dauermagneten,
- Fig. 8: Ausschnitt aus einem Schwingungsdämpfer mit Sensor auf der Innenwandung der Abdeckung und radial polarisiertem Dauermagneten.

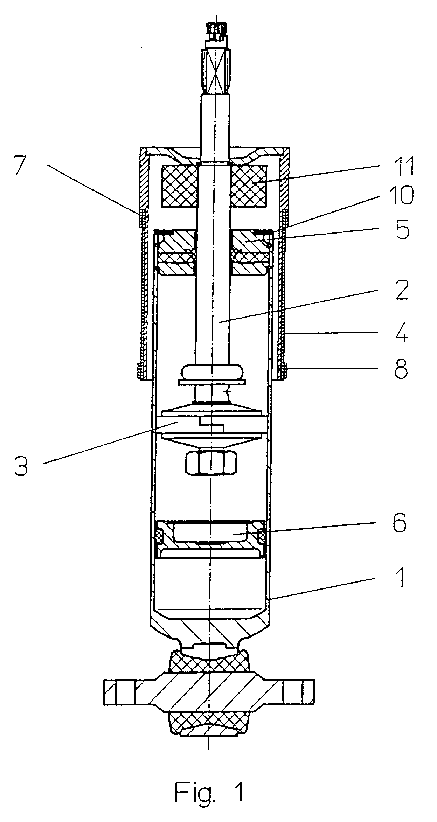

Der in Figur 1 dargestellte hydraulische, regelbare Schwingungsdämpfer besteht im wesentlichen aus einem Dämpferzylinder 1, der durch einen Führungsverschluß 5 verschlossen ist, einem mit einer Kolbenstange 2 verbundenen Dämpferkolben 3 und einer mit der Kolbenstange 2 verbundenen, aus nichtmagnetisierbarem Material bestehenden Abdeckung 4. Im Dämpferzylinder 1 befinden sich zwei Arbeitsräume, die durch den Trennkolben 6 von einem gasgefüllten Ausgleichsraum, welcher zur Kompensation der Volumenzu- bzw. -abnahme im hydraulischen Arbeitsraum durch das ein- bzw. ausfahrende Eigenvolumen der Kolbenstange 2 dient, getrennt werden. Oberhalb des Trennkolbens 6 befindet sich der Dämpferkolben 3, fest verbunden mit der beweglichen Kolbenstange 2, die durch den Führungsverschluß 5 hindurch gleitet und von einer Dichtung abgedichtet wird. Die aus nichtmagnetisierbarem Material bestehende Abdeckung 4 ist derart ausgebildet, daß sie einseitig offen und über den Dämpferzylinder 1 gestülpt ist. In der Abdeckung 4 befindet sich eingebettet eine einteilige Sensorwicklung 9, die sich über die gesamte Länge der Abdeckung 4 erstreckt. Weiterhin liegen zwei einteilig mit der Sensorwicklung 9 ausgebildete Meßwicklungen 7, 8 am unteren und oberen Ende der Abdeckung 4 auf der Sensorwicklung 9. Die Länge dieser Meßwicklungen 7, 8 ist gegenüber der Länge der Sensorwicklung 9 klein. Der durch die Sensor- und Meßwicklungen hindurchgleitende Dauermagnet 10 wurde auf dem Führungsverschluß 5 angeordnet. Zwischen dem Dauermagneten 10 und den Sensor- 9 und Meßwicklungen 7, 8 befindet sich ein Luftspalt.

Wird nun aufgrund einer Fahrbahnunebenheit der Dämpferzylinder 1 nach oben gedrückt, bewegt sich der Dauermagnet 10 innerhalb der ihn umgebenden Sensorwicklung 9 nach oben und es wird in der Sensorwicklung 9 eine Spannung induziert. Dieses Spannungssignal ist innerhalb der Sensorwicklung 9 proportional zur Relativgeschwindigkeit von Dämpferzylinder 1 und Kolben 3. Gelangt der Dauermagnet 10 jedoch an das Ende der Sensorwicklung 9, wird in der Meßwicklung 7 eine Spannung induziert, die die Endlage des Dauermagneten 10 und damit die zulässige Endlage des Dämpferkolbens 3 signalisiert.

Die untere mögliche Ausfahrposition wird auf die gleiche Weise durch die untere Meßwicklung 8 erfaßt. Zur Auswertung der induzierten Spannung werden die Anschlüsse der Sensor- und Meßwicklungen auf eine nicht dargestellte Auswerteelektronik geführt.

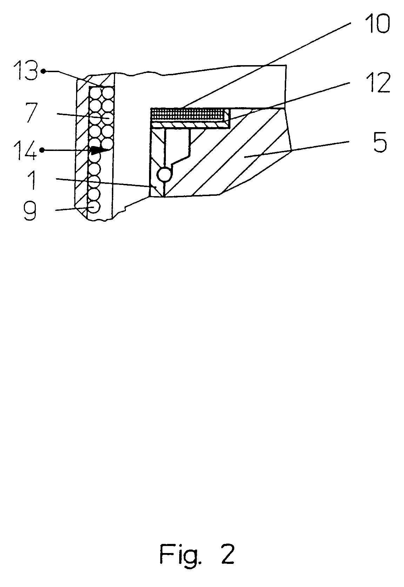

Das in Fig. 2 gezeigte Detail verdeutlicht den Aufbau des oberen Teils der mit der Meßwicklung 7 einteilig ausgeführten Sensorwicklung 9, wobei der Abgriff 14 der Meßwicklung 7 und der Anschluß 13 der Sensorwicklung 9 nach außen geführt sind. Außerdem kann es sinnvoll sein, zwischen dem Führungsverschluß 5 und dem Dauermagneten 10 eine nicht magnetisierbare Zwischenlage 12 anzuordnen, die verhindert, daß die Magnetkraft durch das Eisen des Dämpferzylinders geschwächt wird.

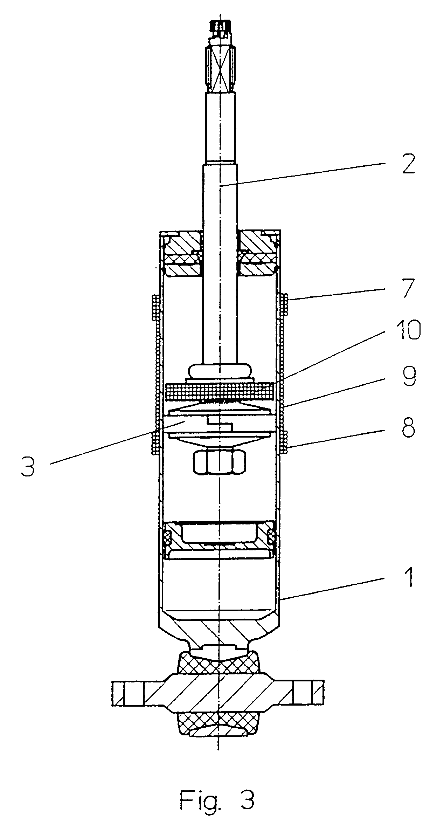

In Fig. 3 wird ein Schwingungsdämpfer ohne Abdeckung gezeigt. Hier befindet sich das System aus Sensor- und Meßwicklungen auf der Wandung des aus nichtmagnetisierbarem Material bestehenden Dämpferzylinders 1 und wurde zum Schutz gegen äußere Einflüsse mit einem Dielektrikum umhüllt. Denkbar wäre auch, die Sensor- und Meßwicklungen direkt in der Wandung des Dämpferzylinders 1 anzuordnen. Der Dauermagnet 10 zur Erzeugung der Induktionsspannung befindet sich am Dämpferkolben 3 oder am unteren Teil der Kolbenstange 2. Auch hier wird in der Sensorwicklung 9 eine Spannung proportional zur Relativgeschwindigkeit und in den Meßwicklungen 7 und 8 ein Erkennungssignal für die Endstellungen des Ein- und Ausfahrhubes induziert.

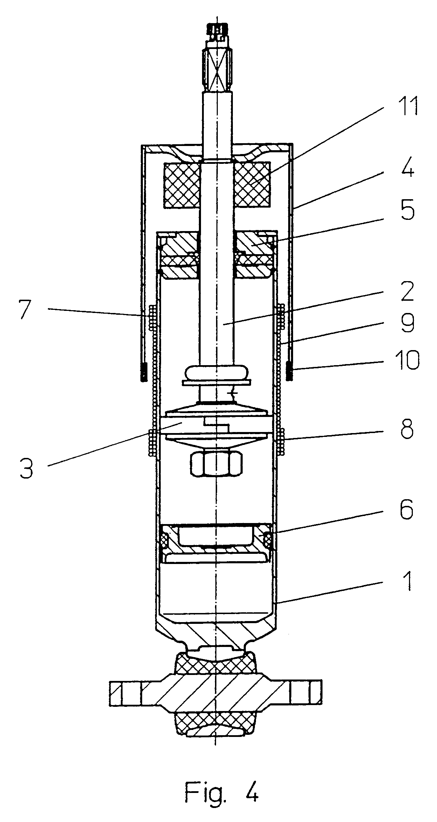

Die Fig. 4 zeigt einen Schwingungsdämpfer, der entgegengesetzt aufgebaut ist. Die mit den Meßwicklungen 7, 8 einteilig ausgebildete Sensorwicklung 9 befindet sich auf oder in der aus nichtmagnetisierbarem Material bestehenden Wandung des Dämpferzylinders 1. Der insbesondere als Ringmagnet ausgebildete Dauermagnet 10 wurde an der Abdeckung 4 angeordnet und ist somit über diese mit der Kolbenstange 2 verbunden. Aufgrund des gleichen Induktionsprinzipes wird bei einer Relativbewegung zwischen Dämpferzylinder 1 und Dämpferkolben 3 in der Sensorwicklung 9 eine der Relativgeschwindigkeit proportionale Spannung induziert und beim Passieren der Meßwicklung 7 oder 8 durch den Dauermagneten 10 ein Kennungssignal für die Endstellungen des Dämpferkolbens 3 erzeugt. Beim Erreichen einer der beiden Endstellungen des Ein- bzw. Ausfahrhubes kann somit über eine Regelung die Dämpfung auf einen höheren Dämpfungswert geschaltet werden, der Dämpfungszylinder fährt langsamer auf den Puffer 11 auf und ein Durchschlagen des Schwingungsdämpfers wird verhindert.

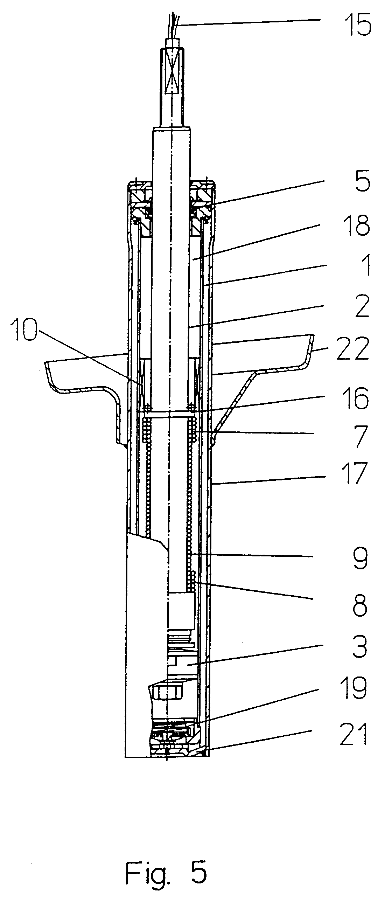

Ein nach dem Zweirohrprinzip arbeitendes, in Fig. 5 dargestelltes Federbein besteht aus dem Arbeitsraum 18, der durch den Dämpferzylinder 1 gebildet wird und am unteren Ende durch das Bodenventil 19 und oben durch den Führungsverschluß 5 begrenzt wird. Im Führungsverschluß 5 gleitet die Kolbenstange 2, die im Arbeitsraum den mit steuer- oder regelbaren Ventilen ausgestatteten Dämpfungskolben 3 aufnimmt. Der Dämpferzylinder 1 wird von einem Außenrohr 17 umgeben, zwischen beiden befindet sich der Ausgleichsraum 20, der etwa bis auf halbe Höhe mit Öl gefüllt ist, während der Arbeitsraum 18 volle Ölfüllung aufweist. Das Außenrohr 17 verbindet den Führungsverschluß 5 mit der das Bodenventil 19 abstützenden Bodenkappe 21 und trägt den eine nicht dargestellte Schraubenfeder aufnehmenden Federteller 22. Zur Begrenzung des Rad-Ausfederungsweges trägt die Kolbenstange 2 einen Zuganschlag 16. Die als zylindrische Spule und mit den Meßwicklungen 7,8 einteilig ausgebildete Sensorwicklung 9 umgibt die Kolbenstange unterhalb des Zuganschlages 16. Die Länge dieser Wicklungen 7, 8 ist gegenüber der Länge der Sensorwicklung 9 klein. Der die Sensorwicklung 9 und die Wicklungen 7, 8 umgebende, zum Beispiel als Ringmagnet ausgeführte Dauermagnet 10 wurde an der Innenwandung des Dämpferzylinders 1 angeordnet. Besteht der Dämpfungszylinder 1 aus nichtmagnetisierbarem Material, kann der Dauermagnet 10 zwischen der Außenwandung des Dämpferzylinders 1 und der Innenwandung des Außenrohrs 17 angeordnet werden.

Federt nun aufgrund einer Fahrbahnunebenheit das Rad aus, wird der Dämpferzylinder 1 zusammen mit dem Außenrohr 17 nach unten gezogen und der Dauermagnet 10 bewegt sich um die Sensorwicklung 9 nach unten. Durch diese Bewegung induziert er in der Sensorwicklung 9 eine Spannung proportional zur Relativgeschwindigkeit zwischen dem Dämpfungskolben 3 und dem Dämpferzylinder 1. Gelangt der Dauermagnet 10 jedoch an das Ende der Sensorwicklung 9, wird auch in der Wicklung 7 eine Spannung induziert, die die Endlage des Dauermagneten und damit die zulässige Endlage des Ausfederungsweges signalisiert. Die zulässige Endlage des Einfederungsweges wird durch die Wicklung 8 angezeigt.

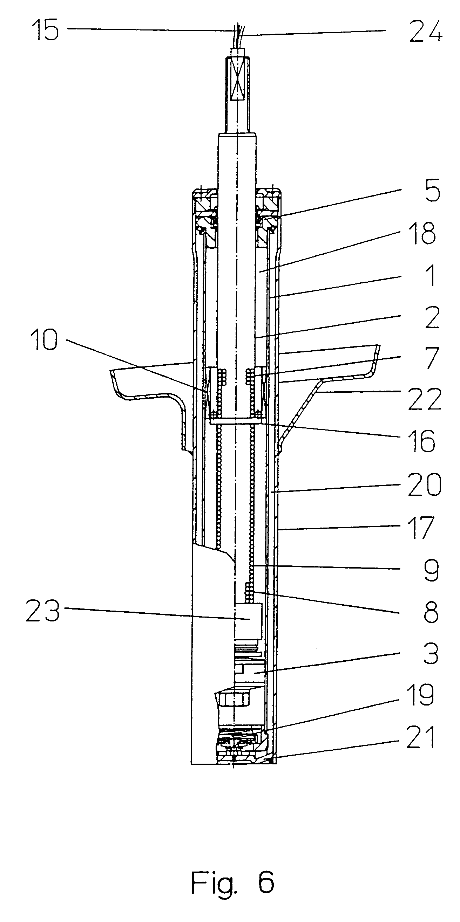

Das Federbein in Fig. 6 weist einen ähnlichen Aufbau wie das Federbein in Fig. 5 auf. Die Kolbenstange 2 wurde hier aus nichtmagnetisierbarem Material, zum Beispiel aus nichtmagnetisierbarem Chrom - Nickel - Stahl, gefertigt und die Sensorwicklung 9 mit den Wicklungen 7, 8 zur Erfassung der Endpositionen des Ein- und Ausfahrhubes axial in der hohlen Kolbenstange 2 angeordnet. Die Anschlüsse der Wicklungen werden zusammen mit den Anschlüssen 24 des steuerbaren Magnetventils 23 in der hohlen Kolbenstange nach außen geführt. Der Dauermagnet 10 zur Erzeugung der Induktionsspannung befindet sich auch hier an der Innenwandung des Dämpferzylinders 1.

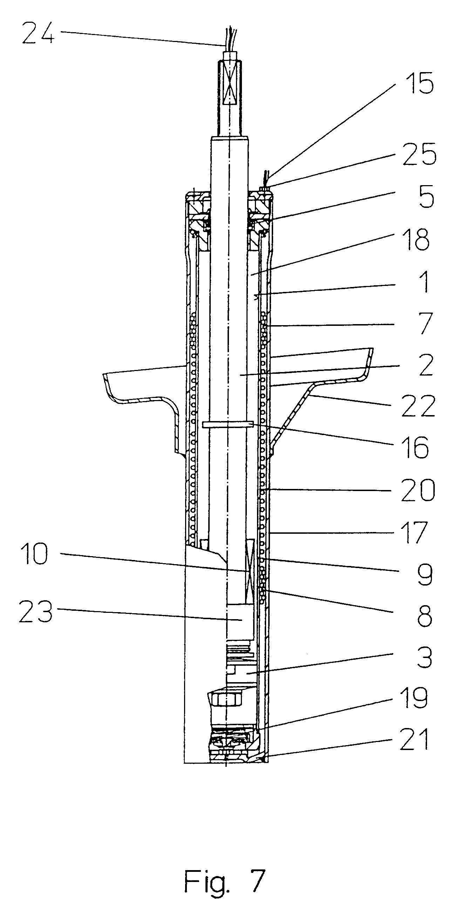

Fig. 7 zeigt ein Federbein, das entgegengesetzt aufgebaut ist. Die Sensorwicklung 9 und die Wicklungen 7, 8 zur Erfassung des Ein- und Ausfahrhubes liegen an der Außenwandung des aus nichtmagnetisierbarem Material bestehenden Dämpferzylinders 1, wobei denkbar wäre, die Wicklungen auch an der Innenwandung des Außenrohrs 17 anzuordnen. Die Anschlüsse 10 der Wicklungen wurden bei dieser Lösung im Ausgleichsraum 20 nach außen geführt und mit einem im Führungsverschluß 5 angeordneten mehrpoligen Stecker 25 verbunden. Der vorzugsweise als Ringmagnet ausgebildete Dauermagnet 10 umschließt fest die Kolbenstange 2 oberhalb des Magnetventils 23. Aufgrund des gleichen Induktionsprinzipes wird bei einer Relativbewegung zwischen Dämpferzylinder 1 und dem mit der Kolbenstange 2 verbundenen Dämpfungskolben 3 in der Sensorwicklung 9 eine der Relativgeschwindigkeit proportionale Spannung induziert und beim Passieren der Wicklung 7 oder 8 durch den Dauermagnet 10 ein Kennungssignal für die Endstellungen des Dämpfungskolben 6 erzeugt. Beim Erreichen einer der beiden Endstellungen des Ein- und Ausfahrhubes kann somit über eine Regelung die Dämpfung auf einen höheren Dämpfungswert geschaltet werden und der Zuganschlag 16 führt langsamer auf den am Führungsverschluß 5 angeordneten Puffer auf.

Bei den in Fig. 5 und Fig. 7 gezeigten Varianten ist es nicht zwingend, die Kolbenstange 2 aus nichtmagnetisierbarem Material zu fertigen, da bei der Sensierung der Einfluß der Kolbenstange 2 als berechenbare Größe eingeht, die in der nicht dargestellten Auswerteschaltung eliminiert werden kann. Ebenso kann der Einfluß des Dämpferzylinders 1 der Varianten in Fig. 5 und 6 errechnet und kompensiert werden.

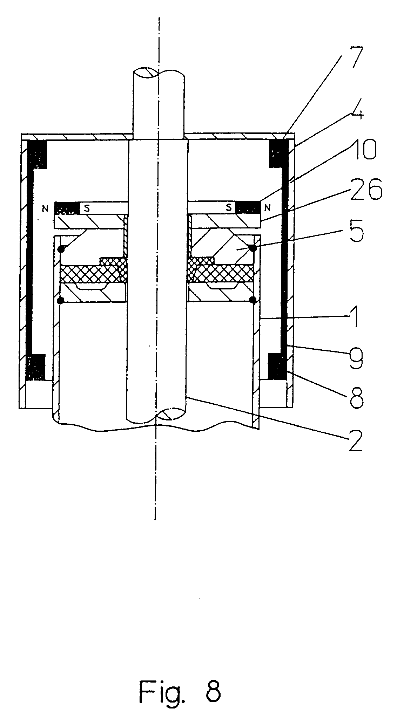

Der in Fig. 8 im Ausschnitt dargestellte hydraulische Schwingungsdämpfer besteht im wesentlichen aus einem Dämpfungszylinder 1, der durch einen Führungsverschluß 5 verschlossen ist, einer im Dämpferzylinder 1 geführten, aus Stahl bestehenden Kolbenstange 2, die an ihrem unteren Ende einen nicht dargestellen Dämpfungskolben trägt, und einer über den Dämpfungszylinder 1 gestülpten, einseitig offenen Abdeckung 4. Der in dem Schwingungsdämpfer integrierte sehr genau arbeitende Sensor zur Messung der Relativgeschwindigkeit und/oder der Kolbenstellung im Dämpferzylinder 1 besteht aus einem radial zur Kolbenstange 2 polarisierten, als Ringmagneten ausgebildeten Dauermagneten 10, der durch eine Scheibe 26 aus nichtferromagnetischem Material, zum Beispiel Aluminium, magnetisch von dem üblicherweise aus Stahl bestehenden Dämpferzylinder 1 getrennt ist. Bei einem Dämpferzylinder 1 und einem Führungsverschluß 5 aus Aluminium kann diese Scheibe wegfallen, der Dauermagnet 10 kann dann im Führungsverschluß 5 integriert sein. Die mit dem Dauermagneten 10 zusammenwirkende Sensorwicklung 9 mit an ihren Enden angeordneten Meßwicklungen 7, 8 wird an der Innenwandung der aus einem ferromagnetischen Material, üblicherweise Stahl, bestehenden Abdeckung 4 angeordnet.

Bewegt sich aufgrund einer Fahrbahnunebenheit der Dämpferzylinder 1 relativ zur Kolbenstange 2 und damit zu der mit dieser in Wirkverbindung stehenden Sensorwicklung 9 und den Meßwicklungen 7, 8, induziert das magnetische Feld des Dauermagneten 10 in der Sensorwicklung 9 eine Spannung aufgrund des geschlossenen magnetischen Kreises, der durch den radial polarisierten Dauermagneten, die Kolbenstange und die Abdeckung gebildet wird, die sehr genau proportional der Relativgeschwindigkeit von Fahrzeugaufbau und -achse ist. In den Meßwicklungen 7, 8 wird damit ein exaktes Signal zur Erkennung der Endstellungen des Dämpfungskolbens 3 erhalten.

Magnetische Streuflüsse, die zu einer Ungenauigkeit des Meßergebnisses führen können, treten nicht auf.

### Bezugszeichen

- 1: Dämpferzylinder
- 2: Kolbenstange
- 3: Dämpfungskolben
- 4: Abdeckung
- 5: Führungsverschluß
- 6: Trennkolben
- 7: Meßwicklung
- 8: Meßwicklung
- 9: Sensorwicklung
- 10: Dauermagnet
- 11: Puffer
- 12: Zwischenlage
- 13: Anschluß
- 14: Abgriff
- 15: Anschlüsse der Sensorwicklung
- 16: Zuganschlag
- 17: Außenrohr
- 18: Arbeitsraum
- 19: Bodenventil
- 20: Ausgleichsraum
- 21: Bodenkappe
- 22: Federteller
- 23: Steuerbares Magnetventil
- 24: Anschlüsse
- 25: mehrpoliger Stecker
- 26: Scheibe

## Patentansprüche

1. Sensor in einem Schwingungsdämpfer für ein Kraftfahrzeug zur Messung der Relativgeschwindigkeit und/oder der Stellung zwischen einem Dämpferzylinder und einem mit einer Kolbenstange verbundenen, sich in diesem bewegenden Dämpfungskolben eines Schwingungsdämpfers für Kraftfahrzeuge, bestehend aus einem Dauermagneten und einer mit dem Dauermagneten zusammenwirkenden, als zylindrische Spule ausgebildeten Sensorwicklung mit an den Enden angeordneten Anschlüssen,
**dadurch gekennzeichnet,**
daß die Sensorwicklung (9) einteilig und derart aufgebaut ist, daß jeweils an einem kurzen Wicklungsteil (7,8) an den Enden der Sensorwicklung eine erhöhte induzierte Spannung getrennt abgreifbar wird.

2. Sensor nach Anspruch 1,
**dadurch gekennzeichnet,**
daß der Dauermagnet mit dem Dämpferzylinder verbunden ist und die Sensorwicklung (9) an der Innenwandung einer mit der Kolbenstange (2) verbundenen Abdeckung (4) angeordnet ist.

3. Sensor nach Anspruch 1,
**dadurch gekennzeichnet,**
daß der Dauermagnet mit dem Dämpferzylinder verbunden ist und die Sensorwicklung (9) an oder in der Wandung einer mit der Kolbenstange (2) verbundenen aus nichtmagnetischem Material bestehenden Abdeckung (4) angeordnet ist.

4. Sensor nach Anspruch 1,
**dadurch gekennzeichnet,**
daß der Dauermagnet mit der Kolbenstange oder dem Dämpfungskolben und die Sensorwicklung mit dem Dämpferzylinder in Wirkverbindung stehen.

5. Sensor nach Anspruch 4,
**dadurch gekennzeichnet,**
daß der Dauermagnet (10) an der mit der Kolbenstange (2) verbundenen Abdeckung (4) befestigt ist.

6. Sensor nach Anspruch 4 oder 5,
**dadurch gekennzeichnet,**
daß die Sensorwicklung (9) in oder an der Außenwandung des aus nichtmagnetischem Material bestehenden Dämpferzylinders (1) angeordnet ist.

7. Sensor nach Anspruch 4 oder 5,
**dadurch gekennzeichnet,**
daß bei einem Zweirohrdampfer die Sensorwicklung (9) an oder innerhalb der Wandung des Außenrohres angeordnet ist.

8. Sensor nach Anspruch 1,
**dadurch gekennzeichnet,**
daß die als zylindrische Spule ausgebildete Sensorwicklung (9) innerhalb des Dämpferzylinders (1) angeordnet ist und mit der Kolbenstange (2) in Wirkverbindung steht.

9. Sensor nach Anspruch 8,
**dadurch gekennzeichnet,**
daß die Sensorwicklung (9) die Kolbenstange (2) unterhalb des Zuganschlages (16) umgibt.

10. Sensor nach Anspruch 1 oder 8,
**dadurch gekennzeichnet,**
daß die Kolbenstange (2) aus nichtmagnetischem Material besteht und die Sensorwicklung (9) in der hohlen Kolbenstange (2) angeordnet ist.

11. Sensor nach einem oder mehreren der Ansprüche 8 bis 10,
**dadurch gekennzeichnet,**
daß der Dauermagnet (10) an oder in der Innenwandung des Dämpferzylinders (1) angeordnet ist.

12. Sensor nach einem oder mehreren der Ansprüche 8 bis 10,
**dadurch gekennzeichnet,**
daß bei einem Federbein, bei dem der aus nichtmagnetischem Material bestehende Dampferzylinder (1) von einem Außenrohr (17) umgeben ist, der Dauermagnet (10) an der Außenwandung des Dämpferzylinders (1) oder der Innenwandung des Außenrohrs (17) angeordnet ist.

13. Sensor nach einem oder mehreren der Ansprüche 1 bis 12,
**dadurch gekennzeichnet,**
daß die kurzen Wicklungsteile (7,8) der Sensorwicklung eine erhöhte Windungszahl je Langeneinheit aufweisen.

14. Sensor nach einem oder mehreren der Ansprüche 1 bis 12,
**dadurch gekennzeichnet,**
daß die Windungsteile (7,8) der Sensorwicklung mehrlagig gewickelt sind.

15. Sensor nach einem oder mehreren der Ansprüche 1 bis 12,
**dadurch gekennzeichnet,**
daß die kurzen Wicklungsteile (7,8) der Sensorwicklung enger gewickelt sind als die mittleren Bereiche der Sensorwicklung.

16. Sensor nach einem oder mehreren der Ansprüche 1 bis 15,
**dadurch gekennzeichnet,**
daß der Dauermagnet (10) als Ringmagnet ausgebildet ist.

17. Sensor nach einem oder mehreren der Ansprüche 1 bis 15,
**dadurch gekennzeichnet,**
daß der Dauermagnet (10) aus ringförmig angeordneten Einzelmagneten besteht.

18. Sensor nach einem oder mehreren der Ansprüche 1 bis 17,
**dadurch gekennzeichnet,**
daß der Dauermagnet (10) in Anordnung zur Kolbenstange (2) radial polarisiert ist.

19. Sensor nach einem oder mehreren der Ansprüche 1 bis 18,
**dadurch gekennzeichnet,**
daß das den Dauermagneten (10) tragende Teil und das die Sensorwicklung (9) tragende Teil für das Magnetfeld des Dauermagneten einen geschlossenen magnetischen Kreis bilden.

## Claims

1. A sensor in a shock absorber for a motor vehicle for measuring the relative velocity and/or the position between a damper cylinder and a damper piston which is connected to a piston rod and moves inside this damper cylinder, the damper piston being part of a shock absorber for motor vehicles, the sensor comprising a permanent magnet and a sensor winding designed as a cylindrical coil which has connections fitted to its ends and interacts with the permanent magnet, characterised in that the sensor winding (9) is formed as a single piece and is constructed in such a way that an increased induced voltage can be separately measured at a short winding component (7,8) at the ends of the sensor winding.

2. A sensor as claimed in claim 1 characterised in that the permanent magnet is connected to the damper cylinder and the sensor winding (9) is fitted on the internal wall of a covering (4) connected to the piston rod (2).

3. A sensor as claimed in claim 1 characterised in that the permanent magnet is connected to the damper cylinder and the sensor winding (9) is fitted on or in the wall of a covering (4) which is manufactured from non-magnetic material and is connected to the piston rod (2).

4. A sensor as claimed in claim 1 characterised in that the permanent magnet is operatively connected to the piston rod or the damper piston and the sensor winding is operatively connected to the damper cylinder.

5. A sensor as claimed in claim 4 characterised in that the permanent magnet (10) is attached to the covering (4) which is connected to the piston rod (2).

6. A sensor as claimed in claim 4 or 5 characterised in that the sensor winding (9) is fitted in or on the external wall of the damper cylinder (1) manufactured from non-magnetic material.

7. A sensor as claimed in claim 4 or 5 characterised in that in a two pipe damper, the sensor winding (9) is fitted on or within the wall of the external pipe.

8. A sensor as claimed in claim 1 characterised in that the sensor winding (9), which is formed as a cylindrical coil, is fitted within the damper cylinder (1) and is operatively connected to the piston rod (2).

9. A sensor as claimed in claim 8 characterised in that the sensor winding (9) surrounds the piston rod (2) below the traction stop (16).

10. A sensor as claimed in claim 1 or 8 characterised in that piston rod (2) is manufactured of non-magnetic material and the sensor winding (9) is fitted in the hollow piston rod (2).

11. A sensor as claimed in one or more of the claims 8 through 10 characterised in that the permanent magnet (10) is fitted on or in the internal wall of the damper cylinder (1).

12. A sensor as claimed in one or more of the claims 8 through 10 characterised in that in a shock absorber leg where the damper cylinder (1), manufactured from non-magnetic material, is surrounded by an external pipe (17), the permanent magnet (10) is fitted on the external wall of the damper cylinder (1) or on the internal wall of the external pipe (17).

13. A sensor as claimed in one or more of the claims 1 through 12 characterised in that the short winding components (7, 8) of the sensor winding comprise a greater number of turns per unit of length.

14. A sensor as claimed in one or more of the claims 1 through 12 characterised in that the winding components (7, 8) of the sensor winding are wound in multiple layers.

15. A sensor as claimed in one or more of the claims 1 through 12 characterised in that the short winding components (7, 8) of the sensor winding are wound more closely than the middle regions of the sensor winding.

16. A sensor as claimed in one or more of the claims 1 through 15 characterised in that the permanent magnet (10) is formed as a ring magnet.

17. A sensor as claimed in one or more of the claims 1 through 15 characterised in that the permanent magnet (10) consists of individual magnets arranged in the shape of a ring.

18. A sensor as claimed in one or more of the claims 1 through 17 characterised in that the permanent magnet (10) is radially polarised in relation to the piston rod (2).

19. A sensor as claimed in one or more of the claims 1 through 18 characterised in that the component supporting the permanent magnet (10) and the component supporting the sensor winding (9) form a complete magnetic circuit for the magnetic field of the permanent magnet.

## Revendications

1. Capteur de mesure de la vitesse relative et/ou de la position entre un cylindre d'amortisseur et un piston d'amortisseur d'un amortisseur de vibrations pour véhicule à moteur, relié à une tige de piston et se déplaçant dans ce cylindre, pour un amortisseur de vibrations pour véhicule à moteur, constitué d'un aimant permanent et d'un bobinage de capteur coopérant avec l'aimant permanent, se présentant sous la forme d'une bobine cylindrique avec des
raccords disposés aux extrémités, caractérisé en ce que
le bobinage de capteur (9) est d'une pièce et est constitué de telle sorte qu'une haute tension induite peut être prélevée séparément, sur une courte portion de bobinage (7, 8) à chaque extrémité du bobinage de capteur.

2. Capteur selon la revendication 1, caractérisé en ce l'aimant permanent est relié au cylindre d'amortisseur, et le bobinage de capteur (9) est disposé sur la paroi interne d'un capot (4) relié à la tige de piston (2).

3. Capteur selon la revendication 1, caractérisé en ce que l'aimant permanent est relié au cylindre d'amortisseur, et le bobinage de capteur (9) est dispose sur ou dans la paroi d'un capot (4) relié a la tige de piston (2) et constitué d'un matériau non magnétique.

4. Capteur selon la revendication 1, caractérisé en ce l'aimant permanent est en liaison efficace avec le piston d'amortisseur ou avec la tige de piston, et le bobinage de capteur est en liaison efficace, avec le cylindre d'amortisseur.

5. Capteur selon la revendication 4, caractérisé en ce que l'aimant permanent (10) est fixé au capot (4) relié à la tige de piston (2).

6. Capteur selon la revendication 4 ou 5, caractérisé en ce que le bobinage de capteur (9) est disposé sur ou dans la paroi externe du cylindre d'amortisseur (1) constitué d'un matériau non magnétique.

7. Capteur selon la revendication 4 ou 5, caractérisé en ce que, pour un amortisseur bi-tube, le bobinage de capteur (9) est disposé sur ou dans la paroi du tube extérieur.

8. Capteur selon la revendication 1, caractérisé en ce que le bobinage de capteur (9), qui se présente sous la forme d'une bobine cylindrique, est disposé à l'intérieur du cylindre d'amortisseur (1), est en liaison efficace avec la tige de piston (2).

9. Capteur selon la revendication 8, caractérisé en ce que le bobinage de capteur (9) entoure la tige de piston (2) en-dessous de la butée d'extension (16).

10. Capteur selon la revendication 1 ou 8, caractérisé en ce que la tige de piston (2) est constituée d'un matériau non magnétique, et en ce que le bobinage de capteur (9) est disposé dans la tige de piston (2) creuse.

11. Capteur selon une ou plusieurs des revendications 8 à 10, caractérisé en ce que l'aimant permanent (10) est disposé sur ou dans la paroi interne du cylindre d'amortisseur (1).

12. Capteur selon une ou plusieurs des revendications 8 à 10 caractérisé en ce que, dans une jambe de force à ressort dans laquelle le cylindre d'amortisseur (1) constitué d'un matériau non magnétique est entouré par un tube extérieur (17), l'aimant permanent (10) est disposé sur la paroi externe du cylindre d'amortisseur (1) ou sur la paroi interne du tube extérieur (17).

13. Capteur selon une ou plusieurs des revendications 1 à 12, caractérise en ce que les courtes portions de bobinage (7, 8) du bobinage capteur présentent un nombre élevé de spires par unité de longueur.

14. Capteur selon l'une ou plusieurs des revendications 1 à 12, caractérisé en ce que les portions de bobinage (7, 8) du bobinage de capteur sont bobinées en plusieurs couches.

15. Capteur selon l'une ou plusieurs des revendications 1 à 12, caractérisé en ce que les courtes portions de bobinage (7, 8) du bobinage de capteur son bobinées de manière plus serrée que la partie médiane du bobinage de capteur.

16. Capteur selon l'une ou plusieurs des revendications 1 à 15, caractérisé en ce que l'aimant permanent (10) se présente sous la forme d'un aimant annulaire.

17. Capteur selon l'une ou plusieurs des revendications 1 à 15, caractérisé en ce que l'aimant permanent (10) est constitué d'aimants individuels disposés en anneau.

18. Capteur selon l'une ou plusieurs des revendications 1 à 17, caractérisé en ce que l'aimant permanent (10) est polarisé radialement par rapport à la tige de piston (2).

19. Capteur selon l'une ou plusieurs des revendications 1 à 18, caractérisé en ce que la pièce portant les aimants permanents (10) et la pièce portant le bobinage de capteur (9) forment pour le champ magnétique des aimants permanents un circuit magnétique ferme.
